# NEUE EUROPÄISCHE PATENTSCHRIFT

(11) **EP 1 274 795 B2**
(45) Veröffentlichungstag und Bekanntmachung des Hinweises auf die Entscheidung über den Einspruch: **14.06.2017**
(45) Hinweis auf die Patenterteilung: 31.07.2013
(21) Anmeldenummer: 01919350.7
(22) Anmeldetag: 27.02.2001
(51) Int. Cl.: C08L 51/04, C08L 55/02, C08F 279/02, C08F 279/04, C08L 69/00, C08K 5/523

(54) **POLYCARBONAT-FORMMASSEN MIT PFROPFKAUTSCHUK**
POLYCARBONATE MOLDING MATERIALS CONTAINING GRAFT RUBBER
MATIERES MOULABLES A BASE DE POLYCARBONATE CONTENANT DU CAOUTCHOUC GREFFE

(30) Priorität: 09.03.2000 DE 10011544; 25.07.2000 DE 10036056
(43) Veröffentlichungstag der Anmeldung: 15.01.2003
(73) Patentinhaber: Covestro Deutschland AG, 51373 Leverkusen (DE)
(72) Erfinder: EICHENAUER, Herbert, 41539 Dormagen (DE); ECKEL, Thomas, 41540 Dormagen (DE); WARTH, Holger, 41539 Dormagen (DE); WITTMANN, Dieter, 51375 Leverkusen (DE)
(74) Vertreter: Levpat
(86) Internationale Anmeldenummer: PCT/EP2001/002190
(87) Internationale Veröffentlichungsnummer: WO 2001/066640

(56) Entgegenhaltungen:
- EP-A- 0 482 451
- EP-A- 0 745 624
- EP-A1- 0 896 023
- WO-A-00/00544
- WO-A-00/04067
- DE-A- 19 858 731
- DE-A1- 3 708 913
- US-A- 5 883 189
- US-A- 5 883 190
- US-A- 5 969 041

## Beschreibung

Die vorliegende Erfindung betrifft thermoplastische Polycarbonat/Pfropfpolymerisat-Formmassen mit verbesserten mechanischen Eigenschaften (insbesondere Reißdehnung) und verbessertem Verarbeitungsverhalten (Fließverhalten).

Die speziellen Pfropfkautschuke gemäß der vorliegenden Erfindung sind allgemein bekannt (EP-A 745 624 bzw. US-A 5 741 853). Sie zeichnen sich durch gute Zähigkeit, Verarbeitbarkeit und Oberflächenqualität (Glanz, Farbeindruck) aus. Es wird allgemein erwähnt, dass die Pfropfkautschuke in Thermoplastharzen wie aromatische Polycarbonate, Polyester, Polyamide eingesetzt werden können, wobei der Anteil der Pfropfkautschuke in den Formmassen vorzugsweise 10 bis 80, insbesondere 20 bis 75 Gew.-% beträgt. Es ist dem Dokument kein Hinweis zu entnehmen, welche vorteilhaften Eigenschaften solche Formmassen besitzen. EP-A 745 624 offenbart nicht die erfindungsgemäßen Zusammensetzungen gemäß der vorliegenden Anmeldung.

Aus DE-A 196 39 821 sind Polycarbonat-ABS-Mischungen bekannt, deren ABS-Teil aus einer Mischung von Pfropfpolymerisaten mit unterschiedlicher Teilchengröße besteht und die sich durch ein verbessertes Verarbeitungsverhalten auszeichnen. Das mit solchen Formmassen erreichbare Niveau an mechanischen Eigenschaften, speziell die Kombination aus Kerbschlagzähigkeit und Reißdehnung, ist jedoch für viele Anwendungen nicht ausreichend.

Auch bei den flammwidrigen Polycarbonat-ABS-Formmassen werden zunehmend höhere Anforderungen an die mechanische Eigenschaften gestellt.

Der Einsatz von organischen Phosphaten wie Oligophosphaten als Flammschutzmittel für Polycarbonat-Formmassen ist bekannt und beispielsweise beschrieben in EP-A 0 363 608, EP-A 0 771 851 und EP-A 0 755 977. Problematisch beim Einsatz von solchen Oligophosphaten als Flammschutzmittel ist stets die damit einhergehende Verschlechterung der mechanischen Eigenschaften.

In US 5,883,189, werden thermoplastische Zusammensetzungen vom ABS-Typ mit bimodalem Pfropfpolymerisat beschrieben, die allgemein Polycarbonat enthalten können.

In US 5,883,190 werden ebenfalls thermoplastische Zusammensetzungen vom ABS-Typ mit bimodalem Pfropfpolymerisat beschrieben die allgemein Polycarbonat enthalten können.

WO 00/04067 beschreibt thermoplastische Zusammensetzungen vom ABS-Typ, die hochwirksame Pfropfkautschukkomponenten enthalten erhalten durch Emulsionspolymerisation unter Verwendung spezieller Initiatorsysteme und Einhaltung definierter Reaktionsbedingungen.

EP 0 745 624 A1 beschreibt in Emulsion hergestellte thermoplastische Formmassen vom ABS-Typ mit verbesserten Eigenschaften wie Zähigkeit, Verarbeitbarkeit und Oberflächenqualität.

In US 5,969,041 werden Pfropfpolymere vom ABS-Typ beschrieben, die im Emulsionsverfahren hergestellt werden und verbesserte Kerbschlagzähigkeit in Verbindung mit hoher Härte oder Hohem Modulus und guter thermischer Verarbeitbarkeit aufweisen.

EP 0 482 451 A1 beschreibt lichtalterungsbeständige, Polycarbonat-Formmassen enthaltend Polycarbonat, aromatisches Polyestercarbonat oder Polyester, ein redoxkatalysiertes Pfropfpolymersitat, optional thermoplastisches, Copolymerisat, eine Phosphorverbindung und ein fluoriertes, Polyolefin,

WO 00/00544 offenbart flammgeschützte Polycarbonat-Zusammensetzungen enthaltend ein multimodales Pfropfpolymer mit Kautschuklatexteilchengrössen von 0,05 bis 5 µm, besonders bevorzugt von 0,2 bis 0,4 µm.

Es bestand daher die Aufgabe, Polycarbonat/Pfropfpolymerisat- (insbesondere vom ABS-Typ) Formmassen mit verbesserten mechanischen Eigenschaften, insbesondere einer Kombination von Schlagzähigkeit und Reißdehnung und verbessertem Verarbeitungsverhalten bereitzustellen.

Es wurde nun gefunden, dass der Einsatz von speziellen Pfropfkautschuksystemen mit spezieller bimodaler Teilchengrößenverteilung und speziellen Gelgehalten in den Kautschukgrundlagen in Polycarbonaten Formassen ergeben, die das gewünschte Eigenschaftsprofil aufweisen.

Gegenstand der Erfindung ist eine Zusammensetzung enthaltend
A) 60 bis 95 Gew.-Teile, vorzugsweise 75 bis 90 Gew.-Teile, aromatisches Polycarbonat,
B) 1 bis 25 Gew.-Teile, bevorzugt 2 bis 20 Gew.-Teile mindestens eines Pfropfkautschuks, welcher erhältlich ist durch Emulsionspolymerisation von Styrol und Acrylnitril im Gewichtsverhältnis 90:10 bis 50:50, wobei Styrol und/oder Acrylnitril ganz oder teilweise ersetzt werden kann durch α-Methylstyrol, Methylmethacrylat oder N-Phenylmaleinimid, in Gegenwart von mindestens zwei Kautschuklatices vom Typ (B1) und (B2), welche jeweils 0 bis 50 Gew.-% eines weiteren Vinylmonomeren copolymerisiert enthalten, und wobei das Massenverhältnis von eingesetzten Monomeren zu eingesetzten Kautschuklatices 25:75 bis 70:30 beträgt, dadurch gekennzeichnet, dass der Kautschuklatex (B1) einen Teilchendurchmesser d₅₀ ≤ 350 nm, vorzugsweise 260 bis 310 nm, eine Breite der Teilchen größenverteilung (gemessen als d₉₀-d₁₀ aus der integralen Teilchengrößenverteilung) von 30 bis 100 nm, vorzugsweise von 40 bis 80 nm, und einen Gelgehalt <70 Gew.-%, vorzugsweise 40 bis 65 Gew.-%, besitzt und der Kautschuklatex (B2) einen Teilchendurchmesser d₅₀ ≥ 350 nm, vorzugsweise 380 bis 450 nm, eine Breite der Teilchengrößenverteilung (gemessen als d₉₀-d₁₀ aus der integralen Teilchengrößenverteilung) von 50 bis 500 nm, vorzugsweise von 100 bis 400 nm, und einen Gelgehalt ≥70 Gew.-%, vorzugsweise 75 bis 90 Gew.-%, aufweist, und der Unterschied im mittleren Teilchendurchmesser ≥ 50 nm, vorzugsweise ≥ 80 nm, besonders bevorzugt ≥ 100 nm beträgt,
C) 0 bis 30 Gew.-Teile, bevorzugt 0 bis 20 Gew.-Teile, mindestens eines thermoplastischen Homo-, Co- oder Terpolymerisats enthaltend Styrol, α-Methylstyrol, Acrylnitril, Methylmethacrylat, N-substituiertem Maleinimid oder Mischungen daraus,
   und
D) 2 bis 20 Gew.-Teile und bevorzugt 3 bis 15 Gew.-Teile (jeweils pro 100 Gew.-Teile A+B+C+D) mindestens eines Flammschutzmittel ausgewählt aus mindestens einem aus der Gruppe der Phosphate oder Mischungen hieraus der Formel (III) und oligomeren Phosphorverbindungen der Formel (IV);
E) 0,05 bis 1 Gew.-Teile, bevorzugt 0,1 bis 0.8 Gew.-Teile fluoriertes Polyolefin sowie gegebenenfalls übliche Additive wie Gleitmittel, Antistatika, Entformungsmittel oder Mischungen daraus.

Die Summe der Gewichtsteile der Komponenten ergibt 100.

### Komponente A

Erfindungsgemäß geeignete, thermoplastische, aromatische Polycarbonate gemäß Komponente A sind solche auf Basis der Diphenole der Formel (I) 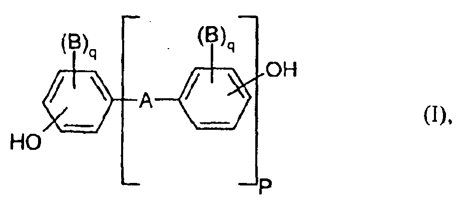 worin
- A: eine Einfachbindung, C₁-C₅-Alkylen, C₂-C₅-Alkyliden, C₅-C₆-Cycloalkyliden, -S- oder -SO₂-,
- B: Chlor, Brom,
- q: 0, 1 oder 2 und
- p: 1 oder 0 sind
oder alkylsubstituierte Dihydroxyphenylcycloalkane der Formel (II), 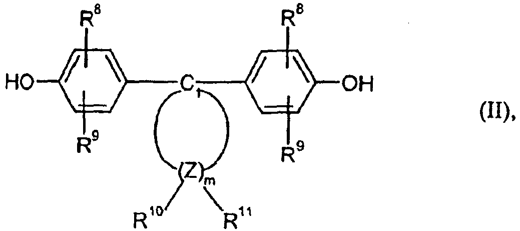 worin
- R⁸ und R⁹: unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
- m: eine ganze Zahl von 4, 5, 6 oder 7, bevorzugt 4 oder 5,
- R¹⁰ und R¹¹: für jedes Z individuell wählbar, unabhängig voneinander Wasserstoff oder C₁-C₆-Alkyl
und
- Z: Kohlenstoff bedeuten, mit der Maßgabe, dass an mindestens einem Atom Z R¹⁰ und R¹¹ gleichzeitig Alkyl bedeuten.

Geeignete Diphenole der Formel (I) sind z.B. Hydrochinon, Resorcin, 4,4-Dihydroxydiphenyl, 2,2-Bis-(4-hydroxyphenyl)-propan, 2,4-Bis-(4-hydroxyphenyl)-2-methylbutan, 1,1-Bis-(4-hydorxyphenyl)-cyclohexan, 2,2-Bis-(3-chlor-4-hydroxyphenyl)-propan, 2,2-Bis-(3,5-dibrom-4-hydroxyphenyl)-propan.

Bevorzugte Diphenole der Formel (I) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Bevorzugte Diphenole der Formel (II) sind 1,1-Bis-(4-hydroxyphenyl)-3,3-dimethylcyclohexan, 1,1-Bis-(4-hydroxyphenyl-3,3,5-trimethylcyclohexan und 1,1-Bis-(4-hyroxyphenyl)-2,4,4-trimethyl-cyclopentan.

Erfindungsgemäß geeignete Polycarbonate sind sowohl Homopolycarbonate als auch Copolycarbonate.

Komponente A kann auch eine Mischung der vorstehend definierten thermoplastischen Polycarbonate sein.

Polycarbonate können in bekannter Weise aus Diphenolen mit Phosgen nach dem Phasengrenzflächenverfahren oder mit Phosgen nach dem Verfahren in homogener Phase, dem sogenannten Pyridinverfahren, hergestellt werden, wobei das Molekulargewicht in bekannter Weise durch eine entsprechende Menge an bekannten Kettenabbrechern eingestellt werden kann.

Geeignete Kettenabbrecher sind z.B. Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 (Le A 19 006) oder Monoalkylphenol bzw. Dialkylphenol mit insgesamt 8 bis 20 C-Atomen in den Alkylsubstituenten gemäß deutscher Patentanmeldung P 3 506 472.2 (Le A 23 654), wie 3,5-di-tert.-Butylphenol, p-iso-Octylphenol), p-tert.-Octylphenol, p-Dodecylphenol und 2-(3,5-Dimethylheptyl)-phenol und 4-(3,5-Dimethyl-heptyl)-phenol.

Die Menge an Kettenabbrechern beträgt im allgemeinen zwischen 0,5 und 10 Mol-%, bezogen auf die Summe der jeweils eingesetzten Diphenole der Formeln (I) und/oder (II).

Die erfindungsgemäß geeigneten Polycarbonate A haben mittlere Molekulargewichte (M̅_{w}, Gewichtsmittel, gemessen z.B. durch Ultrazentrifugation oder Streulichtmessung) von 10 000 bis 200 000, vorzugsweise 20 000 bis 80 000.

Die erfindungsgemäß geeigneten Polycarbonate A können in bekannter Weise verzweigt sein, und zwar vorzugsweise durch den Einbau von 0,05 bis 2 Mol-%, bezogen auf die Summe der eingesetzten Diphenole, an drei- oder mehr als dreifunktionellen Verbindungen, z.B. solchen mit drei oder mehr als drei phenolischen Gruppen.

Bevorzugte Polycarbonate sind neben dem Bisphenol-A-Homopolycarbonat die Copolycarbonate von Bisphenol A mit bis zu 15 Mol-%, bezogen auf die Mol-Summen an Diphenolen, an 2,2-Bis-(3,5-dibrom-4-hydroxyphenyl)-propan und die Copolycarbonate von Bisphenol A mit bis zu 60 Mol-%, bezogen auf die Mol-Summen an Diphenolen, 1,1-Bis-(4-hydroxyphenyl)-3,3,5-trimethyl-cyclohexan.

Bevorzugte Polycarbonate können auch Copolycarbonate mit Polysiloxan-Strukturen sein.

### Komponente B

Bei der Pfropfpolymerisation wird ein Gemisch aus mindestens zwei Kautschuklatices, je einen von Typ B1 und B2, eingesetzt. Das Gewichtsverhältnis B1:B2 beträgt, bezogen auf den jeweiligen Feststoffanteil der Latices, vorzugsweise 90:10 bis 10:90, besonders bevorzugt 60:40 bis 30:70.

Geeignete Kautschuklatices sind beispielsweise und bevorzugt ausgewählt aus Dienkautschuken, EP(D)M-Kautschuken, also solchen auf Basis Ethylen/Propylen und gegebenenfalls Dienen, sowie Acrylatkautschuken. Sie weisen im allgemeinen Glasübergangstemperaturen unterhalb 10°C, vorzugsweise 0°C, besonders bevorzugt unterhalb -10°C auf. Bevorzugt sind Dienkautschuke. Besonders bevorzugt sind Dienkautschuke auf Basis Butadien, die als Comonomere bis zu 50, vorzugsweise bis zu 30 Gew.-% (bezogen auf die gesamte zur Kautschuklatexherstellung eingesetzte Monomermenge) weitere Monomere ausgewählt aus der Gruppe bestehend aus Isopren, Chloropren, Acrylnitril, Styrol, α-Methylstyrol, C₁-C₄-Akylstyrole, C₁-C₈-Alkylacrylate, C₁-C₈-Alkylmethacrylate, Alkylenglycoldiacrylate, Alkylenglykoldimethacrylate, Divinylbenzol oder Mischungen hieraus enthalten können. Bevorzugte Comonomere sind Styrol, Acrylnitril oder Methyl(meth)acrylat oder Mischungen hieraus. Besonders bevorzugt ist Polybutadien. Die Kautschukatices B1 und B2 können durch Emulsionspolymerisation der entsprechenden Monomeren hergestellt werden. Diese Polymerisation ist bekannt und z.B. in Houben-Weyl, Methoden der Organischen Chemie, Makromolekulare Stoffe, Teil 1, S. 674 (1961), Thieme Verlag Stuttgart, beschrieben. Es ist auch möglich, nach bekannten Methoden zunächst ein feinteiligen Kautschuklatex herzustellen und diesen anschließend in bekannter Weise zur Einstellung der erforderlichen Teilchengröße zu agglomerieren.

Einschlägige Techniken sind beschrieben (vergl. EP-A 0 029 613; EP-A 0 007 810; DD-A 144 415 DE-A 1 233 131; DE-A 1 258 076; DE-A 2 101 650). Ebenfalls kann nach der sogenannten Saatpolymerisationstechnik gearbeitet werden, bei der zunächst ein feinteiliges Butadienpolymerisat hergestellt und dann durch Weiterumsatz mit Butadien enthaltenden Monomeren zu größeren Teilchen weiterpolymerisiert wird.

Vorzugsweise erfolgt die Pfropfpolymerisation durch Monomerenzulauf zum Gemisch der Butadienpolymerisatlatices B1 und B2 in der Weise, dass innerhalb der ersten Hälfte der Monomerenlaufzeit 55 bis 90 Gew.-%, vorzugsweise 60 bis 80 Gew.-% und besonders bevorzugt 65 bis 75 Gew.-% der Monomeren zudosiert werden.

Prinzipiell kann man die Butadienpolymerisatlatices B1 und B2 auch herstellen durch Emulgieren von feinteiligen Butadienpolymerisaten in wässrigen Medien (vergl. japanische Patentanmeldung JP-A 55 125 102).

Der Butadienpolymerisatlatex B1 besitzt einen mittleren Teilchendurchmesser d₅₀ ≤ 350 nm, vorzugsweise 260 bis 310 nm, eine Breite der Teilchengrößenverteilung (gemessen als d₉₀-d₁₀ aus der integralen Teilchengrößenverteilung) von 30 bis 100 nm, vorzugsweise von 40 bis 80 nm, und einen Gelgehalt ≤ 70 Gew.-%, vorzugsweise 40 bis 65 Gew.-%.

Der Kautschuklatex B2 besitzt einen mittleren Teilchendurchmesser d₅₀ ≥ 350 nm, vorzugsweise 380 bis 450 nm, eine Breite der Teilchengrößenverteilung (gemessen als d₉₀-d₁₀ aus der integralen Teilchengrößenverteilung) von 50 bis 500 nm, vorzugsweise von 100 bis 400 nm, und einen Gelgehalt ≥ 70 Gew.-%, vorzugsweise 75 bis 90 Gew.-%.

Die erfindungsgemäßen Kautschuklatices zeichnen sich dadurch aus, dass der Unterschied im mittleren Teilchendurchmesser ≥ 50 nm, vorzugsweise ≥ 80 nm und besonders bevorzugt ≥ 100 nm beträgt. Ganz besonders bevorzugt haben die Kautschuklatices einen Unterschied im mittleren Teilchendurchmesser von 80 bis 350 nm, vorzugsweise 100 bis 250 nm.

Die Bestimmung des mittleren Teilchendurchmesser d₅₀ sowie der d₁₀- und d₉₀-Werte kann durch Ultrazentrifugenmessung erfolgen (vgl. W. Scholtan, H. Lange: Kolloid Z. u. Z. Polymere 250, S. 782 bis 796 (1972)), die angegebenen Werte für den Gelgehalt beziehen sich auf die Bestimmung nach der Drahtkäfigmethode in Toluol (vgl. Houben-Weyl, Methoden der Organischen Chemie, Makromolekulare Stoffe, Teil 1, S. 307 (1961), Thieme Verlag Stuttgart).

Die Gelgehalte der Kautschuklatices B1 und B2 können in prinzipiell bekannter Weise durch Anwendung geeigneter Reaktionsbedingungen eingestellt werden (z.B. hohe Reaktionstemperatur und/oder Polymerisation bis zu hohem Umsatz sowie gegebenenfalls Zusatz vernetzend wirkender Substanzen zur Erzielung eines hohen Gelgehaltes oder z.B. niedrige Reaktionstemperatur und/oder Abbruch der Polymerisationsreaktion vor Eintreten einer zu starken Vernetzung sowie gegebenenfalls Zusatz von Molekulargewichtsreglem wie beispielsweise n-Dodecylmercaptan oder t-Dodecylmercaptan zur Erzielung eines niedrigen Gelgehaltes). Als Emulgatoren können die üblichen anionischen Emulgatoren wie Alkylsulfate, Alkylsulfonate, Aralkylsulfonate, Seifen gesättigter oder ungesättigter Fettsäuren sowie alkalischer disproportionierter oder hydrierter Abietin- oder Tallölsäuren verwendet werden, vorzugsweise werden Emulgatoren mit Carboxylgruppen (z.B. Salze von C₁₀-C₁₈-Fettsäuren, disproportionierte Abietinsäure) eingesetzt.

Die Pfropfpolymerisation kann so durchgeführt werden, dass das Monomerengemisch kontinuierlich zu dem Gemisch der Kautschuklatices B1 und B2 gegeben und polymerisiert wird.

Dabei werden bevorzugt spezielle Monomer: Kautschuk-Verhältnisse und eine definierte Vorgehensweise bei der Monomerzugabe zum Kautschuklatex eingehalten.

Zur Erzeugung der erfindungsgemäßen Produkte werden vorzugsweise 25 bis 70 Gew.-Teile, besonders bevorzugt 30 bis 60 Gew.-Teile, eines Gemisches aus Styrol und Acrylnitril, das gegebenenfalls bis zu 50 Gew.-% (bezogen auf Gesamtmenge der in der Pfropfpolymerisation eingesetzten Monomeren) eines oder mehrerer Comonomerer enthalten kann, in Gegenwart von vorzugsweise 30 bis 75 Gew.-Teilen, besonders bevorzugt 40 bis 70 Gew.-Teilen (jeweils bezogen auf Feststoff) des Butadienpolymerisatlatex-Gemisches aus B1 und B2 polymerisiert.

Die bei dieser Pfropfpolymerisation eingesetzten Monomeren sind vorzugsweise Mischungen aus Styrol und Acrylnitril im Gew.-Verhältnis 90:10 bis 50:50, besonders bevorzugt im Gew.-Verhältnis 65:35 bis 80:20, wobei Styrol und/oder Acrylnitril ganz oder teilweise durch copolymerisierbare Monomere, vorzugsweise durch α-Methylstyrol, Methylmethacrylat oder N-Phenylmaleinimid ersetzt werden können.

Zusätzlich können bei der Pfropfpolymerisation Molekulargewichtsregler eingesetzt werden, vorzugsweise in Mengen von 0,05 bis 2 Gew.-%, besonders bevorzugt in Mengen von 0,1 bis 1 Gew.-% (jeweils bezogen auf Gesamtmonomermenge in der Pfropfpolymerisationstufe). Geeignete Molekulargewichtsregler sind beispielsweise n-Dodecylmercaptan, t-Dodecylmercaptan, dimeres α-Methylstyrol, Terpinolen.

Als Initiatoren kommen anorganische und organische Peroxide, z.B. H₂O₂, Di-tert.-butylperoxid, Cumolhydroperoxid, Dicyclohexylpercarbonat, tert.-Butylhydroperoxid, p-Menthanhydroperoxid, Azoinitiatoren wie z.B. Azobisisobutyronitril, anorganische Persalze wie Ammonium-, Natrium-, oder Kaliumpersulfat, Kaliumperphosphat, Natriumperborat sowie Redox-Systeme in Betracht, die sich aus einem in der Regel organischen Oxidationsmittel und einem Reduktionsmittel zusammensetzen, wobei im Reaktionsmedium zusätzlich Schwermetallionen vorhanden sind (siehe H. Logemann in Houben-Weyl, Methoden der Organischen Chemie, Band 14/1, S. 263 bis 297).

Die Reaktionstemperatur ist 25°C bis 160°C, vorzugsweise 40°C bis 90°C. Als Emulgatoren können die obengenannten Verbindungen eingesetzt werden.

Zur Erzeugung der erfindungsgemäßen Produkte wird die Pfropfpolymerisation vorzugsweise durch Monomerenzulauf derart durchgeführt werden, dass innerhalb der ersten Hälfte der Gesamtmonomerzudosierzeit 55 bis 90 Gew.-%, vorzugsweise 60 bis 80 Gew.-% und besonders bevorzugt 65 bis 75 Gew.-% der gesamten bei der Pfropfpolymerisation einzusetzenden Monomeren zudosiert werden; der verbleibende Monomeranteil wird innerhalb der zweiten Hälfte der Gesamtmonomerzudosierzeit zudosiert.

Schließlich wird das so erzeugte Pfropfpolymerisat mit mindestens einem thermoplastischen Harz (Komponente C) gemischt. Dies ist auf verschiedene Weise möglich. Wurde das Thermoplastharz selbst durch Emulsionspolymerisation erzeugt, so können die Latices gemischt und gemeinsam ausgefällt und aufgearbeitet werden. Wurde das Thermoplastharz durch Lösungs- oder Massepolymerisation hergestellt, so muss das Pfropfpolymerisat durch bekannte Verfahren, beispielsweise durch Sprühtrocknung oder durch Zusatz von Salzen und/oder Säuren, Waschen der Fällprodukte und Trocknung des Pulvers isoliert und danach mit dem vorzugsweise in Granulatform vorliegenden Thermoplastharz vermischt werden (vorzugsweise auf Mehrwalzenstühlen, Mischextrudem oder Innenknetem); diese Methode wird bevorzugt angewandt.

### Komponente C

Die Komponente C umfasst ein oder mehrere thermoplastische Vinyl (co)polymerisate.

Geeignet sind als Vinyl(co)Polymerisate C Polymerisate von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
- C.1: 50 bis 99, vorzugsweise 60 bis 80 Gew.-Teilen Vinylaromaten und/oder kernsubstituierten Vinylaromaten wie beispielsweise Styrol, α-Methylstyrol, p-Methylstyrol, p-Chlorstyrol) und/oder Methacrylsäure-(C₁-C₈)-Alkylester wie z.B. Methylmethacrylat, Ethylmethacrylat), und
- C.2: 1 bis 50, vorzugsweise 20 bis 40 Gew.-Teilen Vinylcyanide (ungesättigte Nitrile) wie Acrylnitril und Methacrylnitril und/oder (Meth)Acrylsäure-(C₁-C₈)-Alkylester (wie z.B. Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate C sind harzartig, thermoplastisch und kautschukfrei.

Besonders bevorzugt ist das Copolymerisat aus C.1 Styrol und C.2 Acrylnitril.

Bevorzugte Vinylharze sind Copolymerisate aus Styrol und Acrylnitril im Gewichtsverhältnis 90:10 bis 50:50, wobei Styrol und/oder Acrylnitril ganz oder teilweise durch α-Methylstyrol und/oder Methylmethacrylat ersetzt sein kann.

Die (Co)Polymerisate gemäß C sind bekannt und lassen sich durch radikalische Polymerisation, insbesondere durch Emulsions-, Suspensions-, Lösungs- oder Massepolymerisation herstellen (siehe z.B. DE-AS 2 420 385, DE-A 2 724 360). Die (Co)Polymerisate besitzen vorzugsweise Molekulargewichte M̅_{w} (Gewichtsmittel, ermittelt durch Lichtstreuung oder Sedimentation) zwischen 15 000 und 200 000.

### Komponente D

Als erfindungsgemäß einzusetzende Komponente D kommen Flammschutzmittel der Formel (III) und Formel (IV), sowie gegebenenfalls übliche Additive wie Gleitmittel, Antistatika, Entformungsmittel, Nukleiermittel oder Mischungen in Frage.

### Beispiele für Flammschutzmittel sind

Phosphorverbindungen der Formel (III) 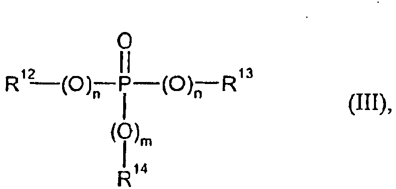 in denen
- R¹², R¹³ und R¹⁴: unabhängig voneinander ein gegebenenfalls halogeniertes C₁-C₈-Alkyl oder ein gegebenenfalls halogniertes und/oder alkyliertes C₅- oder C₆-Cycloalkyl oder ein gegebenenfalls halogeniertes und/oder alkyliertes und/oder aralkyliertes C₆-C₃₀-Aryl
und
- n und m: unabhängig voneinander 0 oder 1 sind,

Diese Phosphorverbindungen sind generell bekannt (siehe beispielsweise Ullmann, Enzyklopädie der technischen Chemie, Band 18, Seiten 301 ff, 1979). Die aralkylierten Phosphorverbindungen sind beispielsweise in der DE-OS 38 24 356 0 beschrieben.

Gegebenenfalls halognierte C₁-C₈-Alkylreste gemäß Verbindungen der Formel (III) und (IV) können einfach oder mehrfach halogeniert, linear oder verzweigt sein. Beispiele für Alkylreste sind Chlorethyl, 2-Chlorpropyl, 2,3-Dibrompropyl, Butyl, Methyl oder Octyl.

Gegebenenfalls halogenierte und/oder alkylierte C₅- oder C₆-Cycloalkyle gemäß Verbindungen der Formel (III) und/oder (IV) sind gegebenenfalls einfach bis mehrfach halognierte und/oder alkylierte C₅- oder C₆-Cycloalkyle, also z.B. Cyclopentyl, Cyclohexyl, 3,3,3-Trimethylcyclohexyl und vollchloriertes Cyclohexyl.

Gegebenenfalls halogenierte und/oder alkylierte und/oder aralkylierte C₆-C₃₀-Arylreste gemäß Verbindungen der Formel (III) sind gegebenenfalls ein oder mehrkernig, einfach oder mehrfach halogeniert und/oder alkyliert und/oder aralkyliert, z.B. Chlorphenyl, Bromphenyl, Pentachlorphenyl, Pentabromphenyl, Phenyl, Kresyl, Isopropylphenyl, benzylsubtituiertes Phenyl und Naphthyl.

Erfindungsgemäß einsetzbare Phosphorverbindungen der Formel (III) sind z.B. Tributylphosphat, Tris-(2-chlorethyl)phosphat, Tris-(2,3-dibrompropyl)phosphat, Triphenylphosphat, Trikresylphosphat, Diphenylkresylphosphat, Diphenyloctylphosphat, Diphenyl-2-ethylkresylphosphat, Tri-(isopropyl-phenyl)phosphat, Tris-(p-benzylphenyl)phosphat, Triphenylphosphinoxid, Methanposphonsäuredimethylester, Methanphosphonsäurediphenylester und Phenylphosphonsäurediethylester.

Geeignete Flammschutzmittel sind weiterhin oligomere Phosphorverbindungen der Formel (IV) 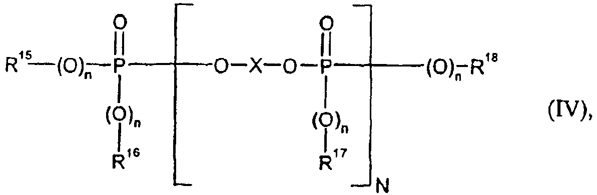 worin
- R¹⁵, R¹⁶, R¹⁷, R¹⁸: unabhängig voneinander C₁-C₈-Alkyl, vorzugsweise Methyl, C₅-C₆-Cycloalkyl, C₆-C₁₀-Aryl, vorzugsweise Phenyl, C₇-C₁₂-Aralkyl, vorzugsweise Phenyl-C₁-C₄-alkyl,
- n: unabhängig voneinander 0 oder 1,
- N: 1 bis 5 und
- X: einen ein- oder mehrkernigen aromatischen Rest mit 6 bis 30 C-Atomen bedeuten; vorzugsweise abgeleitet Diphenolen der Formel (I), insbesondere von Bisphenol A, Hydrochinon oder Resorcin.

Bei Mischungen mehrerer Phosphate der Formel (IV) stellt N einen Mittelwert zwischen 1 und 5 dar.

Das Molekulargewicht der Phosphorverbindungen der Formel (IV) ist im allgemeinen kleiner 2000 g/Mol, vorzugsweise kleiner 1000 g/Mol. Diese sind beispielsweise in der EP-A 0 363 608 beschrieben.

Bevorzugte Flammschutzmittel sind auch Mischungen aus Phosphorverbindungen der Formel (III) und Phosphorverbindungen der Formel (IV).

Die erfindungsgemäßen Zusammensetzungen enthalten im allgemeinen 0,5 bis 25, vorzugsweise 2 bis 20, insbesondere 3 bis 15 Gew.-Teile Phosphorverbindungen (bezogen auf 100 Gew.-Teile Gesamtzusammensetzung) als Flammschutzmittel.

Beispiele für Gleitmittel sind Kohlenwasserstoffe (z.B. Paraffinöle, Polyethylenwachse), Alkohole (z.B. Stearylalkohol), Carbonsäuren (z.B. Laurinsäure, Palmitinsäure, Stearinsäure), Carbonsäureamide (Stearinsäureamid, Ethylendiaminbisstearylamid), Carbonsäureester (z.B. n-Butylstearat, Stearylstearat, Glycerinmonostearat, Glycerintristearat, Pentaerythrittetrastearat); bevorzugte Gleitmittel sind Carbonsäureamide und Carbonsäureester.

Beispiele für Antistatika sind kationaktive Verbindungen (z.B. quartäre Ammonium-, Phosphonium- oder Sulfoniumsalze), anionaktive Verbindungen (z.B. Alkylsulfonate, Alkylsulfate, Alkylphosphate, Carboxylate in Form von Alkali- oder Erdalkalimetallsalzen), nichtionogene Verbindungen (z.B. Polyethylenglykolester, Polyethylenglykolether, Fettsäureester, ethoxylierte Fettamine); bevorzugte Antistatika sind nichtionogene Verbindungen.

Beispiele für Entformungsmittel sind Calciumstearat, Zinkstearat, Pentaerithrit-tetrastearat; bevorzugtes Entformungsmittel ist Pentaerithrittetrastearat.

Bei bestimmten Anforderungen bezüglich Flammschutz können die Polycarbonat/Pfropfpolymerisat-Formmassen fluorierte Polyolefine enthalten. Diese sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser d₅₀ von 0,05 bis 1000, vorzugsweise 0,08 bis 20 µm. Im allgemeinen haben die fluorierten Polyolefine eine Dichte von 1,2 bis 2,3 g/cm³. Bevorzugte fluorierte Polyolefine sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl und Related Polymer" von Schildknecht, John Wiley & Sons, Inc., New York, 1962, Seite 484 - 494; "Fluorpolymers" von Wall, Wiley-Interscience, John Wiley & Sons, Inc., New York, Band 13, 1970, Seite 623 - 654; "Modern Plastics Encyclopedia", 1970 - 1971, Band 47, Nr. 10 A, Oktober 1970, Mc Graw-Hill, Inc., New York, Seite 134 und 774; "Modern Plastics Encyclopedia", 1975 - 1976, Oktober 1975, Band 52, Nr. 10 A, Mc Graw-Hill, Inc., New York, Seite 27, 28 und 472 und US-PS 3 671 487, 3 723 373 und 3 838 092).

Im allgemeinen enthalten die Zusammensetzungen 0,05 bis 1 vorzugsweise 0,05 bis 0,6 Gew.-Teile fluoriertes Polyolefin (bezogen auf 100 Gew.-Teile Gesamtzusammensetzung).

Neben den genannten Additiven können die erfindungsgemäßen Formmassen weiterhin Stabilisatoren, Pigmente, Füllstoffe und Verstärkungsstoffe enthalten. Bevorzugte Füllstoffe sind Glaskugeln, Glimmer, Silikate, Quarz, Talkum, Titandioxid oder Wollastonit. Bevorzugt Verstärkungsstoffe sind Glas- oder Kohlefasern.

Die erfindungsgemäßen Formmassen, enthaltend die Komponenten A bis E und gegebenenfalls weitere bekannte Zusätze wie Stabilisatoren, Farbstoffe, Pigmente, Füll- und Verstärkungsstoffe und/oder Nukleiermittel, werden hergestellt, indem man die jeweiligen Bestandteile in bekannter Weise vermischt und bei Temperaturen von 200°C bis 330°C in üblichen Aggregaten wie Innenkneter, Extrudern und Doppelwellen-schnecken schmelzcompoundiert oder schmelzextrudiert.

Gegenstand der vorliegenden Erfindung ist somit auch ein Verfahren zur Herstellung von thermoplastischen Formmassen, enthaltend die Komponenten A bis E sowie gegebenenfalls Stabilisatoren, Farbstoffe, Pigmente, Füll- und Verstärkungsstoffe und/oder Nukleiermittel, das dadurch gekennzeichnet ist, dass man die Komponenten A bis E sowie gegebenenfalls Stabilisatoren, Farbstoffe, Pigmente, Fließmittel, Füll- und Verstärkungsstoffe und/oder Nukleiermitteln nach erfolgter Vermischung bei Temperaturen von 200 bis 330°C in gebräuchlichen Aggregaten schmelzcompoundiert oder schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Formkörpern jeder Art verwendet werden. Insbesondere können Formkörper durch Spritzguss hergestellt werden. Beispiele für herstellbare Formkörper sind: Gehäuseteile jeder Art, z.B. für Haushaltsgeräte, wie Saftpressen, Kaffeemaschinen, Mixer, für Büromaschinen, oder Abdeckplatten für Bausektor und Teile für den Kfz-Sektor. Sie werden außerdem auf dem Gebiet der Elektrotechnik eingesetzt, weil sie sehr gute elektrische Eigenschaften haben.

Besonders geeignet sind die Formmassen zur Herstellung von dünnwandigen Formteilen (z.B. Datentechnik-Gehäuseteile), wo besonders hohe Ansprüche an Kerbschlagzähigkeit, Reißdehnung und Spannungsrissbeständigkeit der eingesetzten Kunststoffe gestellt werden.

Eine weitere Form der Verarbeitung ist die Herstellung von Formkörpern durch Blasformen oder durch Tiefziehen aus vorher hergestellten Platten oder Folien.

### Beispiele

### Eingesetzte Komponenten

- A1:: Polycarbonat auf Basis Bisphenol A mit einer relativen Lösungsviskosität von 1,28 gemessen in Methylenchlorid bei 25°C und einer Konzentration von 0,5 g/100 ml
- A2:: Polycarbonat auf Basis Bisphenol A mit einer relativen Lösungsviskosität von 1,20 gemessen in Methylenchlorid bei 25°C und einer Konzentration von 0,5 g/100 ml
- B0:: Pfropfpolymerisat erhalten durch Emulsionspolymerisation von 40 Gew.-Teilen eines Monomerengemisches aus Styrol und Acrylnitril (Gew.-Verhältnis 73:27) in Gegenwart von 60 Gew.-Teilen (gerechnet als Feststoff) eines Polybutadienlatex mit einer mittleren Teilchengröße (d₅₀) von ca. 280 nm, Zugabe von ca. 1,0 Gew.-Teilen eines phenolischen Antioxidans, Koagulation mit einem Magnesiumsulfat/Essigsäure-Gemisch und Trocknen des Polymerpulvers,
- B1:: 29 Gew.-Teile (gerechnet als Feststoff) eines durch radikalische Polymerisation hergestellten anionisch emulgierten Polybutadienlatex (Latex B1) mit einem d₅₀-Wert von 277 nm, einem d₉₀-d₁₀-Wert von 44 nm und einem Gelgehalt von 58 Gew.-% und 29 Gew.-Teile (gerechnet als Feststoff) eines durch radikalische Polymerisation hergestellten anionisch emulgierten Polybutadienlatex (Latex B2) mit einem d₅₀-Wert von 415 nm, einem d₉₀-d₁₀-Wert von 144 nm und einem Gelgehalt von 83 Gew.-% werden mit Wasser auf einen Feststoffgehalt von ca. 20 Gew.-% gebracht, wonach auf 70°C erwärmt wird.
Danach werden innerhalb von 6 h parallel 0,26 Gew.-Teile tert.-Butylhydroperoxid und 0,22 Gew.-Teile Natriumascorbat sowie 42 Gew.-Teile eines Monomerengemisches (Styrol/Acrylnitril = 73 : 27) zudosiert, wobei die Temperatur während der letzten beiden Stunden auf 82°C angehoben wird. Parallel dazu werden 1,72 Gew.-Teile (gerechnet als Festsubstanz) des Natriumsalzes eines Harzsäuregemisches (Dresinate 731, Abieta Chemie GmbH, Gersthofen) zudosiert.
Nach einer 4-stündigen Nachreaktionszeit wird der Pfropflatex nach Zugabe von ca. 1,0 Gew.-Teilen eines phenolischen Antioxidans mit einem Magnesiumsulfat/Essigsäure-Gemisch koaguliert und nach dem Waschen mit Wasser das resultierende Pulver bei 70°C im Vakuum getrocknet.
- C:: Styrol/Acrylnitril-Copolygemisch mit einem Styrol/Acrylnitril-Verhältnis von 72:28 mol einer Gewichtsviskosität von 0,55 dl/g (Messung in Dimethylfomamid bei 20°C)
- D1:: Flammschutzmittel: Resorcin-oligophosphat, Fyrolflex^{®} RDP der AKZO Nobel Chemicals GmbH, Düren, Deutschland
- D2:: Flammschutzmittel: Triphenylphosphat, Disflamoll^{®} TP der Bayer AG, Leverkusen, Deutschland
- E:: Fluoriertes Polyolefin: Das Tetrafluorethylenpolymerisat wird als koagulierte Mischung aus einer Pfropfpolymerisat-Emulsion gemäß B1 in Wasser und einer Tetrafluorethylenpolymerisat-Emulsion in Wasser eingesetzt. Das Gewichtsverhältnis Pfropfpolymerisat B1 zum Tetrafluorethylenpolymerisat in der Mischung ist 90 Gew.-% zu 10 Gew.-%. Die Tetrafluoethylenpolymerisat-Emulsion besitzt einen Feststoffgehalt von 60 Gew.-%, die Teilchengröße liegt zwischen 50 und 500 nm. Die Pfropfpolymerisat-Emulsion besitzt einen Feststoffgehalt von 34 Gew.-%.

### Entformungsmittel: Pentaerithrittetrastearat

Die oben beschriebenen Komponenten werden in den in Tabelle 1 angegebenen Mengen in einem Innenkneter bei ca. 200°C bis 220°C homogen vermischt und anschließend in Granulatform überführt.

**Tabelle 1: Zusammensetzung und Eigenschaften der Formmassen**

| | | 1 (Vgl.) | 2 (Vgl) |
|---|---|---|---|
| A1 | | 42,6 | 42,6 |
| B0 | | 23,8 | - |
| B1 | | - | 23,8 |
| C | | 32,7 | 32,7 |
| Entformungsmittel | | 0,4 | 0,4 |
| aₖ | [kJ/m²] | 57,9 | 70,0 |
| Vicat B 120 | [°C] | 109 | 111 |
| Reißdehnung | [%] | 23,2 | 114,4 |
| MVR (260/5) | [cm³/10min] | 10,9 | 11,8 |

Die Bestimmung der Wärmeformbeständigkeit nach Vicat B erfolgt gemäß DIN 53 460 (ISO 306) an Stäben der Abmessung 80 x 10 x 4 mm³.

Die Bestimmung der Reißdehnung erfolgt nach ISO 527.

Die MVR (Schmelzvolumenfließrate) wird nach ISO 1133 bestimmt. Die Bestimmung der Kerbschlagzähigkeit erfolgt nach IO 180/1A.

Das Brandverhalten wird nach UL-Subj. 94 V an Stäben der Abmessung 127x12,7x1,6 mm gemessen, hergestellt auf einer Spritzgussmaschine bei 260°C.

**Tabelle 2: Zusammensetzung und Eigenschaften der Formmassen**

| | | 3 (Vgl.) | 4 |
|---|---|---|---|
| A2 | | 69,0 | 69,0 |
| B0 | | 6,6 | - |
| B1 | | - | 6,6 |
| C | | 8,9 | 8,9 |
| D1 | | 8,1 | 8,1 |
| D2 | | 2,7 | 2,7 |
| E | | 4,2 | 4,2 |
| Entformungsmittel | | 0,4 | 0,4 |
| aₖ | [kJ/m²] | 45 | 49 |
| Vicat B 120 | [°C] | 96 | 98 |
| Reißdehnung | [%] | 28 | 46 |
| MVR (260/5) | [ccm/10min] | 42,7 | 49,4 |
| Gesamtnachbrennzeit UL 94 1,6 mm | [sec] | 38 | 22 |

Sowohl in Tabelle 1 als auch in Tabelle 2 (flammwidrige PC/ABS-Formmassen) zeigen die erfindungsgemäßen Formmassen, die ein spezielles Pfropfpolymerisat enthalten, deutliche Eigenschaftverbesserungen hinsichtlich Kerbschlagzähigkeit und Reißdehnung.

## Patentansprüche

1. Polycarbonat-Zusammensetzungen enthaltend
A) 60 bis 95 Gew.-Teile aromatisches Polycarbonat,
B) 1 bis 25 Gew.-Teile mindestens eines Pfropfkautschuks, welcher erhältlich ist durch Emulsionspolymerisation von Styrol und Acrylnitril im Gewichtsverhältnis 90:10 bis 50:50, wobei Styrol und/oder Acrylnitril ganz oder teilweise ersetzt werden kann durch α-Methylstyrol, Methylmethacrylat oder N-Phenylmaleinimid, in Gegenwart von mindestens zwei Kautschuklatices vom Typ (B1) und (B2), welche jeweils 0 bis 50 Gew.-% eines weiteren Vinylmonomeren copolymerisiert enthalten, und wobei das Massenverhältnis von eingesetzten Monomeren zu eingesetzten Kautschuklatices 25:75 bis 70:30 beträgt, **dadurch gekennzeichnet, dass** der Kautschuklatex (B1) einen Teilchendurchmesser d₅₀ ≤ 350 nm, eine Breite der Teilchengrößenverteilung (gemessen als d₉₀-d₁₀ aus der integralen Teilchengrößenverteilung) von 30 bis 100 nm, und einen Gelgehalt ≤70 Gew.-%, aufweist und der Kautschuklatex (B2) einen Teilchendurchmesser d₅₀ ≥ 350 nm, eine Breite der Teilchengrößenverteilung (gemessen als d₉₀-d₁₀ aus der integralen Teilchengrößenverteilung) von 50 bis 500 nm und einen Gelgehalt ≥70 Gew.-%, aufweist und der Unterschied im mittleren Teilchendurchmesser von B1 und B2 ≥ 50 nm beträgt,
C) 0 bis 30 Gew.-Teile, mindestens eines thermoplastischen Homo-, Co- oder Terpolymerisats enthaltend mindestens ein Monomer ausgewählt aus der Gruppe Styrol, α-Methylstyrol, Acrylnitril, Methylmethacrylat und N-substituiertem Maleinimid,
und
D) 2 bis 20 Gew.-Teile mindestens eines Flammschutzmittel ausgewählt aus mindestens einem aus der Gruppe der Phosphate oder Mischungen hieraus der Formel (III) 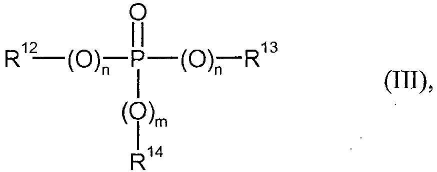 in denen
R¹², R¹³ und R¹⁴ unabhängig voneinander ein gegebenenfalls halogeniertes C₁-C₈-Alkyl oder ein gegebenenfalls halogniertes und/oder alkyliertes C₅- oder C₆-Cycloalkyl oder ein gegebenenfalls halogeniertes und/oder alkyliertes und/oder aralkyliertes C₆-C₃₀-Aryl
und
n und m unabhängig voneinander 0 oder 1 sind, und
oligomeren Phosphorverbindungen der Formel (IV) 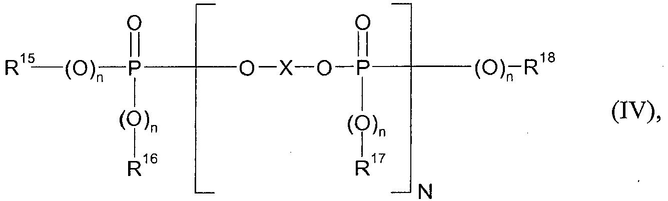 worin
R¹⁵, R¹⁶, R¹⁷, R¹⁸ unabhängig voneinander C₁-C₈-Alkyl, C₅-C₆-Cycloalkyl, C₆-C₁₀-Aryl, C₇-C₁₂-Aralkyl,
n unabhängig voneinander 0 oder 1,
N 1 bis 5 und
X einen ein- oder mehrkernigen aromatischen Rest mit 6 bis 30 C-Atomen bedeuten.
E) 0,05 bis 1 Gew.-Teile fluoriertes Polyolefin
wobei die Summe der Gew.-Teile der Komponenten 100 ergibt.

2. Polycarbonat-Zusammensetzungen gemäß einem oder mehreren der vorhergehenden Ansprüche, wobei die Kautschuklatices B1 und B2 ausgewählt sind aus Dienkautschuken, EP(D)M-Kautschuken und Acrylatkautschuken oder Mischungen hieraus.

3. Polycarbonat-Zusammensetzungen gemäß einem oder mehreren der vorhergehenden Ansprüche, wobei die Kautschuklatices Dienkautschuke sind.

4. Polycarbonat-Zusammensetzungen gemäß einem oder mehreren der vorhergehenden Ansprüche, wobei die Kautschuklatices Dienkautschuke auf Basis Butadien sind, die als Comonomere bis zu 50 Gew.-% (bezogen auf die gesamte zur Kautschuklatexherstellung eingesetzte Monomermenge) weitere Monomere ausgewählt aus der Gruppe bestehend aus Isopren, Chloropren, Acrylnitril, Styrol, α-Methylstyrol, C₁-C₄-Alkylstyrole, C₁-C₈-Alkylacrylate, C₁-C₈-Alkylmethacrylate, Alkylenglycoldiacrylate, Alkylenglykoldimethacrylate, Divinylbenzol oder Mischungen hieraus enthalten können. Bevorzugte Comonomere sind Styrol, Acrylnitril oder Methyl(meth)acrylat oder Mischungen hieraus.

5. Polycarbonat-Zusammensetzungen gemäß einem oder mehreren der vorhergehenden Ansprüche, wobei die Comonomere ausgewählt sind aus der Gruppe Styrol, Acrylnitril, Methyl(meta)acrylat und Mischungen hieraus.

6. Polycarbönat-Zusammensetzungen gemäß einem oder mehreren der vorhergehenden Ansprüche, enthaltend ein oder mehrere Polymerisate enthaltend Styrol und Acrylnitril, wobei zusätzlich α-Methylstyrol oder Methylmethacrylat oder eine Mischung hieraus enthalten sein kann.

7. Polycarbonat-Zusammensetzungen gemäß einem oder mehreren der vorhergehenden Ansprüche, enthaltend weitere Komponenten, ausgewählt aus mindestens einer aus der Gruppe der Flammschutzadditive, Gleitmittel, Antistatika, Stabilisatoren, Pigmente, Farbstoffe, Füll- und Verstärkungsstoffe, Entformungsmittel und Nukleierungsmittel.

8. Polycarbonat-Zusammensetzungen gemäß einem oder mehreren der vorhergehenden Ansprüche, enthaltend mindestens eine Phosphorverbindung ausgewählt aus der Gruppe der Phosphate der Formel (III), wobei R¹², R¹³ und R¹⁴ unabhängig voneinander für Phenyl oder dessen halogenierte oder alkylierte Derivate und n und m 1 bedeuten, und der oliogomeren Phosphorverbindungen der Formel (IV), wobei R¹⁵, R¹⁶, R¹⁷ und R¹⁸ unabhängig voneinander Phenyl oder dessen halogenierte oder alkylierte Derivate, n 1, N 1 bis 5 und X 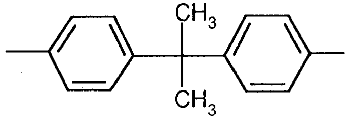 oder Phenyl bedeuten.

9. Verwendung der Zusammensetzungen gemäß der Ansprüche 1 bis 8 zur Herstellung von Formkörpern, Platten oder Folien.

10. Formkörper, Platten oder Folien erhältlich aus Zusammensetzungen gemäß der Ansprüche 1 bis 8.

11. Gehäuseteile, Abdeckplatten für Bausektor und Teile für den KFZ-Sektor gemäß Anspruch 10.

## Claims

1. Polycarbonate compositions comprising
A) from 60 to 95 parts by weight of aromatic polycarbonate,
B) from 1 to 25 parts by weight of at least one graft rubber obtainable via emulsion polymerization of styrene and acrylonitrile in a ratio of from 90:10 to 50:50 by weight, where styrene and/or acrylonitrile can be replaced entirely or to some extent by α-methylstyrene, methyl methacrylate or N-phenylmaleimide, in the presence of at least two rubber lattices of type (B1) and (B2) each of which comprises from 0 to 50% by weight of another vinyl monomer in copolymerized form, and where the ratio by mass of monomers used to rubber lattices used is from 25:75 to 70:30, **characterized in that** the particle diameter d₅₀ of the rubber latex (B1) is ≤ 350 nm, its particle size distribution breadth (measured as d₉₀-d₁₀ from the cumulative particle size distribution) is from 30 to 100 nm, and its gel content is ≤ 70% by weight, and the particle diameter d₅₀ of the rubber latex (B2) is ≥ 350 nm, its particle size distribution breadth (measured as d₉₀-d₁₀ from the cumulative particle size distribution) is from 50 to 500 nm, and its gel content is ≥ 70% by weight, and the difference in the median particle diameter of B1 and B2 is ≥ 50 nm,
C) from 0 to 30 parts by weight of at least one thermoplastic homo-, co- or terpolymer comprising at least one monomer selected from the group of styrene, α-methylstyrene, acrylonitrile, methyl methacrylate and N-substituted maleimide,
and
D) from 2 to 20 parts by weight of at least one flame retardant
selected from at least one from the group of the phosphates and mixtures thereof of the formula (III) 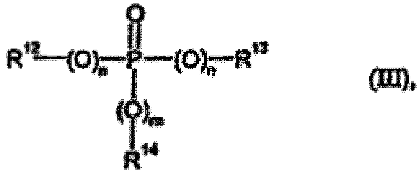 in which
R¹², R¹³ and R¹⁴ are mutually independently optionally halogenated C₁-C₈-alkyl or optionally halogenated and/or alkylated C₅- or C₆-cycloalkyl or optionally halogenated and/or alkylated and/or aralkylated C₆-C₃₀-aryl
and
n and m are mutually independently 0 or 1, and
oligomeric phosphorus compounds of the formula (IV) 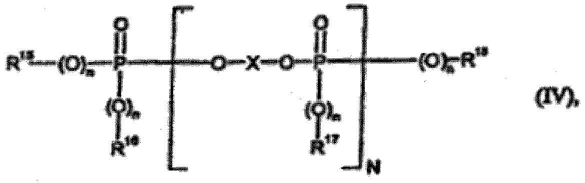 in which
R¹⁵, R¹⁶, R¹⁷, R¹⁸ are mutually independently C₁-C₈-alkyl, C₅-C₆-cycloalkyl, C₆-C₁₀-aryl, C₇-C₁₂-aralkyl,
n is mutually independently 0 or 1,
N is from 1 to 5 and
X is a mono- or polynuclear aromatic moiety having from 6 to 30 carbon atoms,
E from 0.05 to 1 part by weight of fluorinated polyolefin,
where the sum of the parts by weight of the components is 100.

2. Polycarbonate compositions according to one or more of the preceding claims, where the rubber lattices B1 and B2 are selected from diene rubbers, EP(D)M rubbers and acrylate rubbers and mixtures thereof.

3. Polycarbonate compositions according to one or more of the preceding claims, where the rubber latices are diene rubbers.

4. Polycarbonate compositions according to one or more of the preceding claims, where the rubber latices are butadiene-based diene rubbers which can comprise, as comonomers, up to 50% by weight (based on the entire amount of monomer used to produce the rubber latex) of other monomers selected from the group consisting of isoprene, chloroprene, acrylonitrile, styrene, α-methylstyrene, C₁-C₄-alkylstyrenes, C₁-C₈-alkyl acrylates, C₁-C₈-alkyl methacrylates, alkylene glycol diacrylates, alkylene glycol dimethacrylates, divinylbenzene and mixtures thereof. Preferred comonomers are styrene, acrylonitrile and methyl (meth)acrylate and mixtures thereof.

5. Polycarbonate compositions according to one or more of the preceding claims, where the comonomers are selected from the group of styrene, acrylonitrile, methyl (meth)acrylate and mixtures thereof.

6. Polycarbonate compositions according to one or more of the preceding claims, comprising one or more polymers comprising styrene and acrylonitrile, where α-methylstyrene or methyl methacrylate or a mixture thereof can also be present.

7. Polycarbonate compositions according to one or more of the preceding claims, comprising other components selected from at least one from the group of the flame-retardant additives, lubricants, antistatic agents, stabilizers, pigments, dyes, fillers and reinforcing materials, mould-release agents and nucleating agents.

8. Polycarbonate compositions according to one or more of the preceding claims, comprising at least one phosphorus compound selected from the group of the phosphates of the formula (III), where R¹², R¹³ and R¹⁴ are mutually independently phenyl or its halogenated or alkylated derivatives and n and m are 1, and of the oligomeric phosphorus compounds of the formula (IV), where R¹⁵, R¹⁶, R¹⁷ and R¹⁸ are mutually independently phenyl or its halogenated or alkylated derivatives, n is 1, N is from 1 to 5 and X is 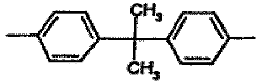 or phenyl.

9. Use of the compositions according to Claims 1 to 8 for producing mouldings, sheets or foils.

10. Mouldings, sheets or foils obtainable from compositions according to Claims 1 to 8.

11. Housing components and protective covering sheets for the construction sector and parts for the automobile sector according to Claim 10.

## Revendications

1. Compositions de polycarbonate, contenant
A) 60 à 95 parties en poids de polycarbonate aromatique,
B) 1 à 25 parties en poids d'au moins un caoutchouc greffé, qui peut être obtenu par polymérisation en émulsion de styrène et acrylonitrile en un rapport pondéral de 90:10 à 50:50, le styrène et/ou l'acrylonitrile pouvant être remplacé(s) en partie ou en totalité par l'α-méthylstyrène, le méthacrylate de méthyle ou le N-phénylmaléimide, en présence d'au moins deux latex de caoutchouc du type (B1) et (B2), qui contiennent chacun copolymérisés 0 à 50 % en poids d'un autre monomère vinylique, et le rapport en masse des monomères utilisés aux latex de caoutchouc utilisés valant de 25:75 à 70:30, **caractérisées en ce que** le latex de caoutchouc (B1) présente un diamètre de particule d₅₀ ≤ 350 nm, une largeur de la distribution de tailles de particules (mesurée en tant que d₉₀-d₁₀ à partir de la distribution intégrale de tailles de particules) de 30 à 100 nm, et une teneur en gel ≤ 70 % en poids et le latex de caoutchouc (B2) présente un diamètre de particule d₅₀ ≥ 350 nm, une largeur de la distribution de tailles de particules (mesurée en tant que d₉₀-d₁₀ à partir de la distribution intégrale de tailles de particules) de 50 à 500 nm, et une teneur en gel ≥ 70 % en poids, et la différence de diamètre moyen de particule entre B1 et B2 est ≥ 50 nm,
C) 0 à 30 parties en poids d'au moins un homo-, coou terpolymérisat thermoplastique contenant au moins un monomère choisi dans le groupe constitué par le styrène, l'α-méthylstyrène, l'acrylonitrile, le méthacrylate de méthyle et le maléimide N-substitué,
et
D) 2 à 20 parties en poids d'au moins un agent ignifuge
choisi parmi au moins un du groupe des phosphates ou mélanges de ceux-ci, de formule (III) 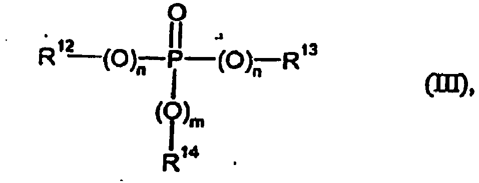 dans laquelle
R¹², R¹³ et R¹⁴ représentent chacun indépendamment un groupe alkyle en C₁-C₈ éventuellement halogéné ou un groupe cycloalkyle en C₅ ou C₆ éventuellement halogéné et/ou alkylé ou un groupe aryle en C₆-C₃₀ éventuellement halogéné et/ou alkylé et/ou aralkylé
et
n et m valent indépendamment l'un de l'autre 0 ou 1, et
des composés phosphorés oligomères de formule (IV) 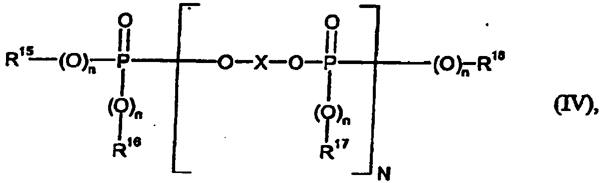 dans laquelle
R¹⁵, R¹⁶, R¹⁷, R¹⁸ représentent indépendamment les uns des autres un groupe alkyle en C₁-C₈, cycloalkyle en C₅-C₆, aryle en C₆-C₁₀, aralkyle en C₇-C₁₂,
n représente chaque fois indépendamment 0 ou 1,
N vaut de 1 à 5
X représente un radical aromatique mono- ou polynucléaire ayant de 6 à 30 atomes de carbone,
E) 0,05 à 1 partie en poids de polyoléfine fluorée,
la somme des parties en poids des composants étant égale à 100.

2. Compositions de polycarbonate selon une ou plusieurs des revendications précédentes, dans lesquelles les latex de caoutchouc B1 et B2 sont choisis parmi des caoutchoucs diène, des caoutchoucs EP(D)M et des caoutchoucs acrylate ou des mélanges de ceux-ci.

3. Compositions de polycarbonate selon une ou plusieurs des revendications précédentes, dans lesquelles les latex de caoutchouc sont des caoutchoucs diène.

4. Compositions de polycarbonate selon une ou plusieurs des revendications précédentes, dans lesquelles les latex de caoutchouc sont des caoutchoucs diène à base de butadiène, qui peuvent contenir comme comonomères jusqu'à 50 % en poids (par rapport à la quantité totale de monomères utilisée dans la préparation du latex de caoutchouc) d'autres monomères choisis dans le groupe constitué par l'isoprène, le chloroprène, l'acrylonitrile, le styrène, l'α-méthylstyrène, les alkyl(C₁-C₄)styrènes, les acrylates d'alkyle en C₁-C₈, les méthacrylates d'alkyle en C₁-C₈, les diacrylates d'alkylèneglycols, les diméthacrylates d'alkylèneglycols, le divinylbenzène ou des mélanges de ceux-ci. Des comonomères préférés sont le styrène, l'acrylonitrile ou le (méth)acrylate de méthyle ou des mélanges de ceux-ci.

5. Compositions de polycarbonate selon une ou plusieurs des revendications précédentes, dans lesquelles les comonomères sont choisis dans le groupe constitué par le styrène, l'acrylonitrile, le (méth)acrylate de méthyle et des mélanges de ceux-ci.

6. Compositions de polycarbonate selon une ou plusieurs des revendications précédentes, contenant un ou plusieurs polymérisats contenant du styrène et de l'acrylonitrile, en outre de l'α-méthylstyrène ou du méthacrylate de méthyle ou un mélange de ceux-ci pouvant être contenus.

7. Compositions de polycarbonate selon une ou plusieurs des revendications précédentes, contenant d'autres composants, choisis parmi au moins un du groupe des additifs ignifuges, lubrifiants, agents antistatiques, stabilisants, pigments, colorants, charges et matières de renfort, agents de démoulage et agents de nucléation.

8. Compositions de polycarbonate selon une ou plusieurs des revendications précédentes, contenant au moins un composé phosphoré choisi dans le groupe des phosphates de formule (III), dans laquelle R¹², R¹³ et R¹⁴ représentent chacun indépendamment un groupe phényle ou ses dérivés halogénés ou alkylés et n et m représentent 1, et des composés phosphorés oligomères de formule (IV), dans laquelle R¹⁵, R¹⁶, R¹⁷ et R¹⁸ représentent indépendamment les uns des autres un groupe phényle ou ses dérivés halogénés ou alkylés, n vaut 1, N vaut de 1 à 5 et X représente 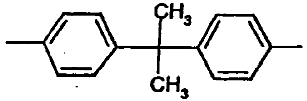 ou le groupe phényle.

9. Utilisation des compositions selon les revendications 1 à 8, pour la production de corps moulés, de plaques ou de films.

10. Corps moulés, plaques ou films pouvant être obtenus à partir des compositions selon les revendications 1 à 8.

11. Éléments de carter, plaques de couverture pour le secteur du bâtiment et éléments pour le secteur des automobiles selon la revendication 10.
